# EUROPEAN PATENT APPLICATION

(11) **EP 4 790 698 A1**
(43) Date of publication of application: **12.08.2026**
(21) Application number: 24915804.9
(22) Date of filing: 06.11.2024
(51) Int. Cl.: G09G 3/34, G09G 3/20, H04N 13/128, H04N 13/122, G06F 3/14, G06F 3/0484, G06F 3/16, G06F 3/048

(54) **DISPLAY DEVICE FOR INDICATING RECEPTION OF NOTIFICATION WHILE DISPLAYING IMAGE AND CONTROL METHOD THEREFOR**

(30) Priority: 02.01.2024 KR 20240000578; 26.02.2024 KR 20240027340
(71) Applicant: Samsung Electronics Co., Ltd., Suwon-si, Gyeonggi-do 16677 (KR)
(72) Inventor: KANG, Donghun, Suwon-si Gyeonggi-do 16677 (KR); SON, Sunmin, Suwon-si Gyeonggi-do 16677 (KR); LEE, Sangyoon, Suwon-si Gyeonggi-do 16677 (KR); JUNG, Jingun, Suwon-si Gyeonggi-do 16677 (KR); OH, Seungbin, Suwon-si Gyeonggi-do 16677 (KR)
(74) Representative: Appleyard Lees IP LLP
(86) International application number: PCT/KR2024/017353
(87) International publication number: WO 2025/146915

(57) **Abstract**

Disclosed is a display device. The display device comprises: a display including a plurality of pixel elements disposed on the front surface and a plurality of light emitting elements disposed on an edge region of the rear surface; a memory for storing one or more instructions; and at least one processor. By executing one or more instructions, the processor: controls the display to provide an image via the plurality of pixel elements; when a preset notification is received, identifies at least one light emitting element among the plurality of light emitting elements on the basis of location information on the screen related to the preset notification; and causes the at least one identified light emitting element to emit light on the basis of color information related to the preset notification.

## Description

### [Technical Field]

The disclosure relates to a display device and a control method therefor, and more particularly, to a display device that indicates reception of a notification while displaying an image, and a control method therefor.

### [Background Art]

Recently, various home appliances are being developed and distributed, and in particular, development and distribution of display devices are more active than in any other fields.

For example, for improving a user's viewing experience and sense of immersion, a technology for dynamically adjusting a lighting according to the colors and the content of an image that a TV is outputting by arranging a surround lighting on the rear surface of the TV is being utilized.

However, if a notification is received while an image is being output and the notification is displayed in a partial area of the image, or output of the image is stopped, there is a problem that the user's sense of immersion is difficult to be maintained.

Even if a notification is received while an image is being output, if the notification is ignored, the user's sense of immersion can be maintained, but there is a problem that the user cannot recognize whether a notification was received.

Accordingly, there has been a demand for a method by which a sense of immersion of a user who is viewing an image is maintained, and at the same time, if a notification is received, the user is made to recognize whether a notification was received by utilizing a surround lighting.

### [Disclosure of Invention]

### [Solution to Problem]

A display device according to an embodiment of the disclosure for achieving the aforementioned purpose includes a display including a plurality of pixel elements disposed on a front surface and a plurality of light emitting elements disposed on an edge region of a rear surface, memory storing one or more instructions, and at least one processor, wherein the at least one processor is configured to, by executing the one or more instructions, control the display to provide an image through the plurality of pixel elements, and based on receiving a predetermined notification, identify at least one light emitting element among the plurality of light emitting elements based on location information on a screen related to the predetermined notification, and cause the at least one identified light emitting element to emit light based on color information related to the predetermined notification.

A control method for a display device including a plurality of pixel elements disposed on a front surface and a plurality of light emitting elements disposed on an edge region of a rear surface according to an embodiment of the disclosure includes the steps of providing an image through the plurality of pixel elements, and based on receiving a predetermined notification, identifying at least one light emitting element among the plurality of light emitting elements based on location information on a screen related to the predetermined notification, and causing the at least one identified light emitting element to emit light based on color information related to the predetermined notification.

According to an embodiment of the disclosure for achieving the aforementioned purpose, in a computer-readable recording medium including a program executing a control method for a display device including a plurality of pixel elements disposed on a front surface and a plurality of light emitting elements disposed on an edge region of a rear surface, the control method for a display device includes the steps of providing an image through the plurality of pixel elements, and based on receiving a predetermined notification, identifying at least one light emitting element among the plurality of light emitting elements based on location information on a screen related to the predetermined notification, and causing the at least one identified light emitting element to emit light based on color information related to the predetermined notification.

### [Brief Description of Drawings]

FIG. 1 is a diagram for illustrating a front surface and a rear surface of a display device according to an embodiment of the disclosure;
FIG. 2 is a block diagram illustrating a configuration of a display device according to an embodiment of the disclosure;
FIG. 3 is a diagram for illustrating a method for a conventional display device to display an image and a predetermined notification;
FIG. 4 is a diagram for illustrating a method for a display device that received a predetermined notification to cause at least one light emitting element among a plurality of light emitting elements to emit light according to an embodiment of the disclosure;
FIG. 5 is a diagram for illustrating a method for a 3D display device to display a 3D image and a predetermined notification according to an embodiment of the disclosure;
FIG. 6 is a diagram for illustrating a method for a display device to cause light emitting elements corresponding to each of a plurality of predetermined notifications to emit light according to an embodiment of the disclosure;
FIG. 7 is a diagram for illustrating a method for causing light emitting elements to emit light according to an application related to a function according to an embodiment of the disclosure;
FIG. 8 is a diagram for illustrating information related to colors corresponding to each of a plurality of users according to an embodiment of the disclosure;
FIG. 9 is a diagram for illustrating a display device that indicates a progress rate corresponding to a progress bar by using a plurality of light emitting elements according to an embodiment of the disclosure;
FIG. 10 is a diagram for illustrating a method for causing a plurality of light emitting elements to emit light based on location information on a screen of each of a plurality of users according to an embodiment of the disclosure;
FIG. 11 is a diagram for illustrating a color corresponding to an image according to an embodiment of the disclosure;
FIG. 12 is a diagram for illustrating a display device that communicates with an external device according to an embodiment of the disclosure; and
FIG. 13 is a flow chart for illustrating a control method for a display device according to an embodiment of the disclosure.

### [Mode for Invention]

Hereinafter, the disclosure will be described in detail with reference to the accompanying drawings.

As terms used in the embodiments of the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or" B" or "A and B."

Further, the expressions "first," "second," and the like used in this specification may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, unless defined obviously differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Further, in the disclosure, "a module" or "a part" may perform at least one function or operation, and may be implemented as hardware or software, or as a combination of hardware and software. In addition, a plurality of "modules" or "parts" may be integrated into at least one module and implemented as at least one processor (not shown), excluding "a module" or "a part" that needs to be implemented as specific hardware.

Also, in this specification, the term "a user" may refer to a person who uses an electronic apparatus or an apparatus using an electronic apparatus (e.g.: an artificial intelligence electronic apparatus).

Hereinafter, an embodiment of the disclosure will be described in more detail with reference to the accompanying drawings.

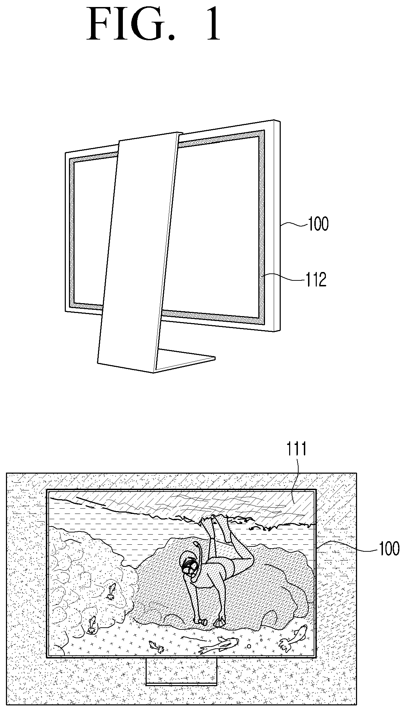

FIG. 1 is a diagram for illustrating a front surface and a rear surface of a display device according to an embodiment of the disclosure.

Referring to FIG. 1, a display device 100 according to an embodiment of the disclosure may include a plurality of pixel elements 111 disposed on a front surface, and display an image by using the plurality of pixel elements 111.

According to an embodiment, the display device 100 may be implemented as a TV, but is not limited thereto, and any device equipped with a display function such as a video wall, a large format display (LFD), digital signage, a digital information display (DID), a projector display, etc. can be applied without limitation. Also, the display device 100 may be implemented as displays in various forms such as a liquid crystal display (LCD), organic light emitting diodes (OLEDs), liquid crystal on silicon (LCoS), digital light processing (DLP), a quantum dot (QD) display panel, quantum dot light emitting diodes (QLEDs), micro light emitting diodes (µLEDs), mini LEDs, etc.

According to an embodiment, the display device 100 may include a plurality of light emitting elements 112 disposed on a rear surface. For example, the display device 100 may include a plurality of light emitting elements 112 disposed on an edge region of the rear surface (or, an outer region of the rear surface).

For example, the display device 100 may display an image through the plurality of pixel elements 111, and display colors corresponding to the image through the plurality of light emitting elements 112.

For example, the display device 100 may control the plurality of light emitting elements 112 to emit colors corresponding to the image toward a wall surface on which the display device 100 is located, and provide a gradation effect or a gradient effect that the strength of the colors corresponding to the image is gradually reduced as it gets farther from the display device 100 on the rear side of the display device 100 (or, in the space wherein the display device 100 is located).

According to an embodiment, the display device 100 may display an image by using the plurality of pixel elements 111 disposed on the front surface of the display device 100, and emit colors corresponding to the image (or, at least one color among the colors included in the image) by using the plurality of light emitting elements 112 disposed on the rear surface of the display device 100, and may thereby provide a sense of immersion to the user.

For example, the display device 100 may control the plurality of light emitting elements 112 disposed on the rear surface of the display device 100 to react to an image that is being displayed in real time, and emit colors corresponding to the image by using the plurality of pixel elements 111 disposed on the front surface of the display device 100.

According to an embodiment, while the plurality of light emitting elements 112 disposed on the rear surface of the display device 100 are emitting colors corresponding to an image, the display device 100 may control at least one light emitting element among the plurality of light emitting elements 112 to emit a color corresponding to a context, and may thereby maintain the sense of immersion of the user viewing the image, and at the same time, make the context recognized by the user.

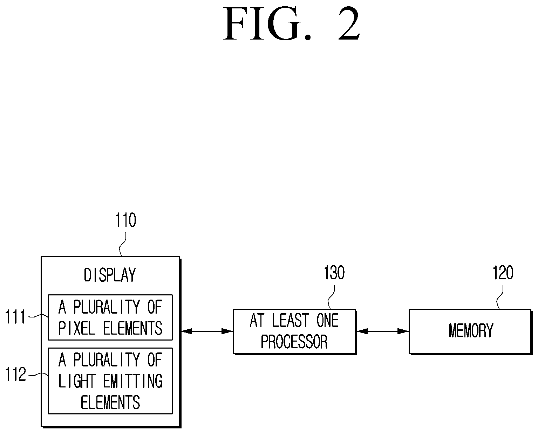

FIG. 2 is a block diagram illustrating a configuration of a display device according to an embodiment of the disclosure.

Referring to FIG. 2, the display device 100 includes a display 110, memory 120, and at least one processor 130.

According to an embodiment of the disclosure, the display 110 may include a plurality of pixel elements 111 disposed on the front surface, and include a plurality of light emitting elements 112 disposed on the rear surface. Hereinafter, description will be mainly focused on an embodiment wherein the display 110 is implemented with a plurality of light emitting elements 112 disposed on an edge region of the rear surface, but the disclosure is not limited thereto, and the display 110 may be implemented while being modified in various forms.

For example, each of the plurality of pixel elements 111 may include a self-luminous element. A self-luminous element may be at least one of a light emitting diode (LED) or a micro LED. According to an embodiment, an LED element may be implemented as a micro LED. Here, the micro LED is an LED in a size of about 5 - 100 micrometers, and is a micro-mini light emitting element emitting light by itself without a color filter.

However, the disclosure is not limited thereto, and the display 110 may include a backlight, and each of the plurality of pixel elements 111 may display an image by controlling a transmission rate of light emitted from the backlight, and may include sub-pixels of red (R), green (G), and blue (B).

According to an embodiment of the disclosure, the display 110 may include the plurality of light emitting elements 112 disposed on the edge region of the rear surface, and the plurality of light emitting elements 112 may be referred to as a smart lighting, a surround lighting, a screen backlight, etc., but hereinafter, they will be generally referred to as the plurality of light emitting elements 112 for the convenience of explanation.

Referring to the upper part of FIG. 1, for the convenience of explanation, the edge region of the rear surface of the display 110 may be divided into a first edge region corresponding to a left area of the rear surface of the display 110, a second edge region corresponding to a right area, a third edge region corresponding to an upper area, and a fourth edge region corresponding to a lower area.

According to an embodiment, the plurality of light emitting elements 112 disposed on the first to fourth edge regions of the rear surface of the display 110 may include at least one of a first array including first light emitting elements disposed on the first edge region, a second array including second light emitting elements disposed on the second edge region, a third array including third light emitting elements disposed on the third edge region, or a fourth array including fourth light emitting elements disposed on the fourth edge region.

For example, as illustrated in the upper part of FIG. 1, the display 110 may include the first to fourth arrays. However, the disclosure is not limited thereto. For example, the display 110 may include only the fourth array including the fourth light emitting elements disposed on the fourth edge region corresponding to the lower area of the rear surface of the display 110.

As illustrated in the upper part of FIG. 1, the plurality of light emitting elements 112 may be arranged in a quadrangular form. However, the disclosure is not limited thereto, and the plurality of light emitting elements 112 may be arranged in forms of various polygons.

According to an embodiment, while displaying an image, the at least one processor 130 may cause the first light emitting elements included in the first array to emit light based on colors corresponding to the right area of the image, cause the second light emitting elements included in the second array to emit light based on colors corresponding to the left area of the image, cause the third light emitting elements included in the third array to emit light based on colors corresponding to the upper area of the image, and cause the fourth light emitting elements included in the fourth array to emit light based on colors corresponding to the lower area of the image, as illustrated in the lower part of FIG. 1.

Accordingly, while displaying an image, the at least one processor 130 may emit colors synchronized to the image through the plurality of light emitting elements 112.

According to an embodiment, the plurality of light emitting elements 112 disposed on the edge region of the rear surface of the display device 100 may improve the user's viewing experience and sense of immersion by dynamically adjusting colors (or, color temperatures) according to colors of an image, or a content of an image. For example, the plurality of light emitting elements 112 may emit light based on colors included in an image, and may emit light by changing the colors by reacting to a change of the image in real time.

In the drawings according to the disclosure, each of the patterns illustrated on the outside of the display device 100 may indicate different colors emitted by the plurality of light emitting elements 112 (or, different colors reflected on a rear wall surface of the display device 100), and the strength of the colors emitted by the plurality of light emitting elements 112 may be reduced as it gets farther from the display device 100.

According to an embodiment, the memory 120 may store data necessary for the various embodiments of the disclosure. The memory 120 may be implemented in a form of memory embedded in the display device 100, or implemented in a form of memory that can be attached to or detached from the display device 100 according to the use of stored data.

For example, data for driving the display device 100 may be stored in memory embedded in the display device 100, and data for an extended function of the display device 100 may be stored in memory that can be attached to or detached from the display device 100.

In the case of memory embedded in the display device 100, the memory may be implemented in forms such as volatile memory (e.g.: dynamic RAM (DRAM), static RAM (SRAM), or synchronous dynamic RAM (SDRAM), etc.), non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)), etc.

In the case of memory that can be attached to or detached from the display device 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.) and external memory that can be connected to a USB port (e.g., a USB memory), etc.

According to an embodiment, the memory 120 may store at least one instruction or a computer program including instructions for controlling the display device 100.

According to an embodiment, the at least one processor 130 controls the overall operations of the display device 100. Specifically, the at least one processor 130 may be connected with each component of the display device 100, and control the overall operations of the display device 100.

According to an embodiment, the at least one processor 130 may control a plurality of robots 200 and a charging station 300.

The at least one processor 130 may perform the operations of the display device 100 according to various embodiments by executing the at least one instruction stored in the memory 120.

The at least one processor 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 130 may control one or a random combination of the other components of the electronic apparatus, and perform an operation related to communication or data processing. The at least one processor 130 may execute one or more programs or instructions stored in the memory 120. For example, the at least one processor 130 may perform the method according to an embodiment of the disclosure by executing the one or more instructions stored in the memory 120.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 130 may be implemented as a single core processor including one core, or may be implemented as one or more multicore processors including a plurality of cores (e.g., multicores of the same kind or multicores of different kinds). In case the at least one processor 130 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

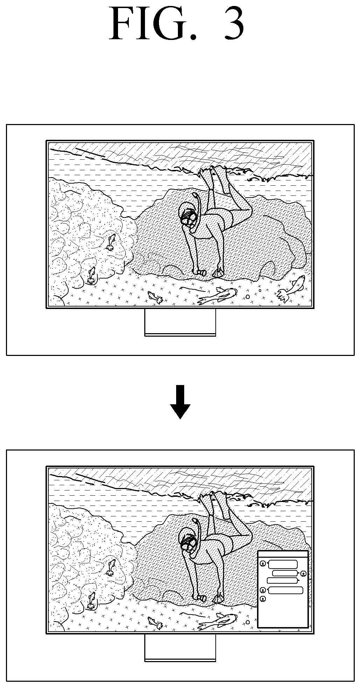

FIG. 3 is a diagram for illustrating a method for a conventional display device to display an image and a predetermined notification.

Referring to FIG. 3, a conventional display device had a limitation that it cannot make a context recognized to a user while providing an image.

If a predetermined notification (e.g., a push notification) is received while providing an image, a conventional display device may continuously display the image, and may not display the predetermined notification for the user's sense of immersion.

For example, as illustrated in the upper part of FIG. 3, if a predetermined notification is received while providing an image, a conventional display device displays only the image until a user input for identifying the predetermined notification is received, and thus there is a problem that the user cannot recognize whether the predetermined notification was received in real time.

As illustrated in the lower part of FIG. 3, if a user input for identifying the predetermined notification is received, a conventional display device provides the predetermined notification by overlaying an application for providing the predetermined notification on a part of an image. Although the user can recognize the predetermined notification, the predetermined notification is provided while an application is overlaid on a part of the image, and thus there is a problem that the user's sense of immersion is not maintained.

If the predetermined notification is received while providing an image, a conventional display device may provide the predetermined notification while overlaying an application on a part of the image, regardless of whether a user input for identifying the predetermined notification is received, and there is a problem that the user's sense of immersion is not maintained.

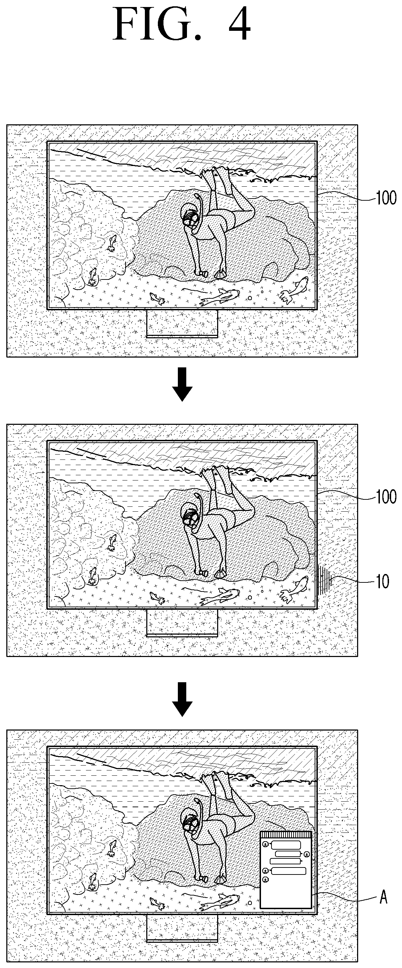

FIG. 4 is a diagram for illustrating a method for a display device that received a predetermined notification to cause at least one light emitting element among a plurality of light emitting elements to emit light according to an embodiment of the disclosure.

Referring to FIG. 4, the at least one processor 130 may control the plurality of pixel elements 111 included in the display 110 to display an image received from a source device.

According to an embodiment, the source device may be implemented as an electronic apparatus such as a set-top box, a cloud server, an over-the-top (OTT) media service server, a streaming service (e.g., Samsung Gaming Hub), a home automation control panel, a security control panel, a media box (e.g.: Samsung HomeSync^{™}, Apple TV^{™}, or Google TV^{™}), a game console (e.g.: Xbox^{™}, PlayStation^{™}, Switch^{™}), an electronic dictionary, an electronic key, a camcorder, or an electronic photo frame. However, the disclosure is not limited thereto, and the source device may include at least one of a TV, a user terminal device, a tablet PC, a mobile phone, a video phone, an e-book reader, a desktop PC, a laptop PC, a netbook computer, a workstation, a server, a PDA, a portable multimedia player (PMP), an MP3 player, a medical device, a camera, a virtual reality (VR) implementation device, a spatial computing device, or a wearable device. Here, a wearable device can obviously be implemented as at least one of an accessory-type device (e.g.: a watch, a ring, a bracelet, an ankle bracelet, a necklace, glasses, a contact lens, or a head-mounted-device (HMD)), a device integrated with fabrics or clothing (e.g.: electronic clothing), a body-attached device (e.g.: a skin pad or a tattoo), or an implantable circuit.

Referring to the upper part of FIG. 4, the at least one processor 130 may identify colors corresponding to an image, and cause the plurality of light emitting elements 112 disposed on the edge region of the rear surface of the display 110 to emit light based on the colors corresponding to the image.

Referring to the center part of FIG. 4, if the predetermined notification is received while providing an image, the at least one processor 130 may identify at least one light emitting element among the plurality of light emitting elements 112 based on location information on the screen related to the predetermined notification. According to an embodiment, the at least one processor 130 may cause the at least one identified light emitting element to emit light based on color information related to the predetermined notification.

For example, the predetermined notification includes a push notification, and the push notification may include a notification (or, a message) that can be provided on the screen as a pop-up. According to an embodiment, the push notification includes a push notification based on an application (A) and a push notification based on web, and hereinafter, the predetermined notification will be assumed as a push notification based on the application (A), for the convenience of explanation.

However, the disclosure is not limited thereto, and the predetermined notification may include various types of notifications such as a push notification based on web, etc. For example, the predetermined notification may include a badge notification based on the application (A), and may include a message (e.g., a call, an SMS message, an instant message, etc.) received from a predetermined contact, a push notification of the predetermined application (A), etc.

As explained in FIG. 3, if the predetermined notification is received, a conventional display device provides the predetermined notification by overlaying an application for providing the predetermined notification on a part of the image (or, popping up the application on a part of the image).

The display device 100 according to the disclosure may, if the predetermined notification is received, cause at least one light emitting element among the plurality of light emitting elements 112 to emit light based on color information related to the predetermined notification for making the user recognize whether the predetermined notification was received, without overlaying the application (A) for providing the predetermined notification (e.g., an instant messenger, etc.) on a part of the image in order not to interfere with the sense of immersion of the user viewing the image.

According to an embodiment, if the predetermined notification is received, the at least one processor 130 may identify at least one light emitting element among the plurality of light emitting elements 112 based on location information on the screen related to the predetermined notification.

For example, the location information on the screen related to the predetermined notification may include a location for displaying the application (A) for providing the predetermined notification.

For example, the at least one processor 130 may identify a previous display location or a default display location of the application (A) as a location to display the application (A) on the screen.

According to an embodiment, the at least one processor 130 may identify at least one light emitting element adjacent to the previous display location or the default display location of the application (A) for providing the predetermined notification among the plurality of light emitting elements 112.

For example, the at least one processor 130 may identify at least one light emitting element adjacent to the center part of the application (A), the center part of a title bar of the application (A), etc. (e.g., at least one light emitting element within the closest distance, or at least one light emitting element within a predetermined distance) among the plurality of light emitting elements 112.

According to an embodiment, if the predetermined notification is received while displaying an image, the at least one processor 130 may not display the application (A) for providing the predetermined notification, but may cause at least one light emitting element to emit light based on a location for displaying the application (A) (referred to as location information on the screen related to the predetermined notification hereinafter), and make the user recognize whether the predetermined notification was received.

For example, the at least one processor 130 may cause at least one light emitting element to emit light based on color information related to the predetermined notification.

For example, the at least one processor 130 may identify a color 10 corresponding to the application (A) for providing the predetermined notification, and control at least one light emitting element to emit the identified color 10. For example, the at least one processor 130 may identify the color of the title bar of the application (A), the main color of the application (A) (e.g., the mode color), or a predetermined color corresponding to the application (A) as the color information related to the predetermined notification.

Here, the title bar is located in the upper part of the application (A), and may display a title related to the application (A) (or, a title related to the predetermined notification).

As illustrated in the center part of FIG. 4, according to an embodiment, the predetermined notification may be a push notification based on the instant message application (A), and if the push notification is received, the at least one processor 130 may control at least one light emitting element adjacent to the location on the screen for displaying the instant message application (A) to emit the color 10 corresponding to the instant message application (A).

According to an embodiment, the at least one processor 130 may control at least one light emitting element to continuously emit light based on the color information related to the predetermined notification. However, the disclosure is not limited thereto. For example, the at least one processor 130 may control at least one light emitting element to flicker based on the color information related to the predetermined notification during a predetermined time (e.g., 5 sec).

According to an embodiment, if a user input for identifying a push notification is received, the at least one processor 130 may display the push notification by displaying the instant message application (A) according to the location information.

Referring to the lower part of FIG. 4, while at least one light emitting element among the plurality of light emitting elements 112 is emitting the color 10 corresponding to the application (A) for providing the predetermined notification, if a user input for identifying the predetermined notification is received, the at least one processor 130 may display the predetermined notification by overlaying the predetermined notification on the image.

For example, if a user input for identifying the predetermined notification is received through an input device, the at least one processor 130 may display the predetermined notification or the application (A) for providing the predetermined notification to be overlaid on a part of the image based on the location information on the screen related to the predetermined notification.

For example, the input device may include various types of devices that receive inputs of the user by interacting with the user such as a keyboard, a mouse, a microphone, a touch screen, etc.

However, the disclosure is not limited thereto, and the input device may include a camera that tracks the user's gaze. According to an embodiment, if the user's gaze corresponds to (or is adjacent to) at least one light emitting element that emits light based on the color information related to the predetermined notification through the camera, the at least one processor 130 may display the predetermined notification.

According to an embodiment, while at least one light emitting element is emitting light based on the color information related to the predetermined notification, if a user input is received, the at least one processor 130 may display the predetermined notification, and turn off the at least one light emitting element, or control the at least one light emitting element to emit light based on the color 10 corresponding to the image.

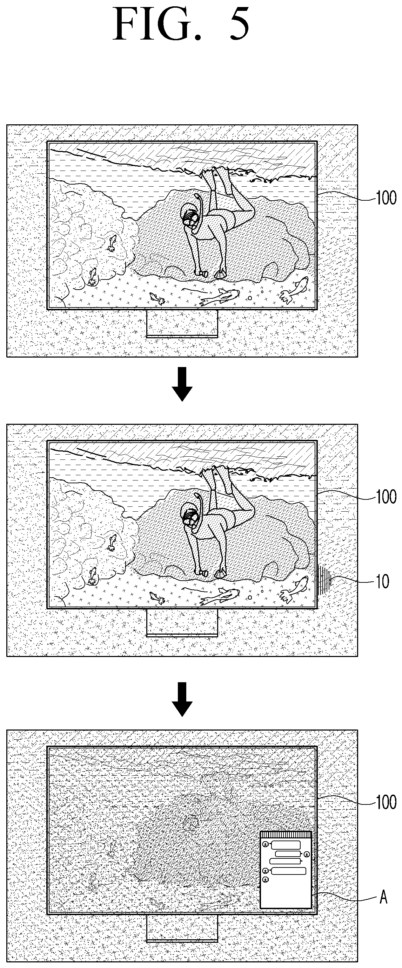

FIG. 5 is a diagram for illustrating a method for a 3D display device to display a 3D image and a predetermined notification according to an embodiment of the disclosure.

Referring to FIG. 5, the display device 100 according to an embodiment of the disclosure may include a 3D display device providing a 3D image.

For example, an image provided by the display device 100 may be a 3D image including a left-eye image and a right-eye image. The display device 100 may provide the 3D image by a glasses-free method by displaying the left-eye image and the right-eye image.

For example, the display 110 may include left-eye pixels and right-eye pixels, and display a left-eye image through the left-eye pixels, and display a right-eye image through the right-eye pixels.

The display 110 may include a visual field separator (e.g., a parallax barrier) for providing different views, i.e., a multi-view for each viewing area on the front surface of the display 110, and display images of different views for each viewing area by blocking light through the visual field separator.

According to an embodiment, the left eye of the user views a left-eye image provided by left-eye pixels, and the right eye of the user views a right-eye image provided by right-eye pixels, and thus the user can view images of different views for each viewing area, i.e., a 3D image.

However, the disclosure is not limited thereto, and the display device 100 can obviously provide a 3D image by a glasses-based method.

As explanation regarding the upper part of FIG. 5 overlaps with the explanation regarding the upper part of FIG. 4, and explanation regarding the center part of FIG. 5 overlaps with the explanation regarding the center part of FIG. 4, the explanation will be omitted.

Referring to the lower part of FIG. 5, while at least one light emitting element among the plurality of light emitting elements 112 is emitting the color 10 corresponding to the application (A) for providing the predetermined notification, if a user input for identifying the predetermined notification is received, the at least one processor 130 may display the predetermined notification by overlaying the predetermined notification on the image.

The display device 100 may display a 3D image indicating a depth by using a binocular parallax.

According to an embodiment, if the display device 100 overlays the predetermined notification on a part of a 3D image, the depth of the 3D image and the depth of the predetermined notification are different, and thus the user views a plurality of objects (e.g., objects included in the 3D image, the predetermined notification) having different depths, and accordingly, there is a problem that fatigue of the user is caused.

According to an embodiment, if a user input for identifying the predetermined notification is received, the at least one processor 130 may overlay the predetermined notification on a 3D image, and blur the 3D image.

According to an embodiment, if the at least one processor 130 displays the application (A) for providing the predetermined notification clearly, and displays a 3D image by blurring the image, even if the user views the predetermined notification and the 3D image having different depths, the at least one processor 130 may provide an effect that the predetermined notification is located more in front than the 3D image to the user. Accordingly, fatigue of the user may not be caused.

According to an embodiment, if a user input for identifying the predetermined notification is received, the at least one processor 130 may overlay the application (A) for providing the predetermined notification on a 3D image, and grant a depth to the 3D image and thereby provide an effect that the predetermined notification is located more in front than the 3D image. For example, the at least one processor 130 may grant a depth to a 3D image such that the 3D image is located relatively more to the rear than the predetermined notification, and thereby provide an effect that the predetermined notification is located more in front than the 3D image. Accordingly, fatigue of the user may not be caused.

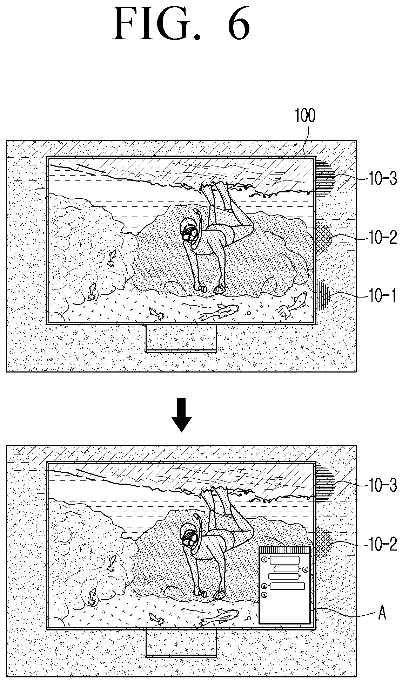

FIG. 6 is a diagram for illustrating a method for a display device to cause light emitting elements corresponding to each of a plurality of predetermined notifications to emit light according to an embodiment of the disclosure.

In FIG. 4 and FIG. 5, for the convenience of explanation, explanation was described by assuming a case wherein the at least one processor 130 receives one predetermined notification, but the disclosure is not limited thereto.

As illustrated in FIG. 6, the at least one processor 130 may cause light emitting elements corresponding to each of a plurality of predetermined notifications to emit light.

For example, if a predetermined first notification is received, the at least one processor 130 may cause a first light emitting element 10-1 among the plurality of light emitting elements 112 to emit light based on location information on the screen related to the predetermined first notification.

According to an embodiment, the at least one processor 130 may cause the first light emitting element to emit light based on color information related to the predetermined first notification, or a color 10-1 corresponding to an application for providing the predetermined first notification.

According to an embodiment, if a predetermined second notification is received, the at least one processor 130 may cause a second light emitting element 10-2 among the plurality of light emitting elements 112 to emit light based on location information on the screen related to the predetermined second notification, and the second light emitting element 10-2 may emit a color 10-2 corresponding to an application for providing the predetermined second notification.

According to an embodiment, the at least one processor 130 may control the light emission strength of at least one light emitting element that emits light according to reception of a predetermined notification based on the accumulated number of predetermined notifications.

For example, if a predetermined third notification is received, the at least one processor 130 may cause a third light emitting element among the plurality of light emitting elements 112 to emit light based on location information on the screen related to the predetermined third notification, and cause the third light emitting element to emit light based on a color 10-3 corresponding to an application for providing the predetermined third notification.

According to an embodiment, before a user input for identifying the predetermined third notification is received, if the number of times of receiving the predetermined third notification increases, the at least one processor 130 may increase the light emission strength of the third light emitting element 10-3 in proportion to it.

For example, if the predetermined third notification is received, the at least one processor 130 may cause the third light emitting element 10-3 to emit light according to the first strength, and if the predetermined third notification is received again before a user input for identifying the predetermined third notification is received, the at least one processor 130 may cause the third light emitting element 10-3 to emit light according to the second strength.

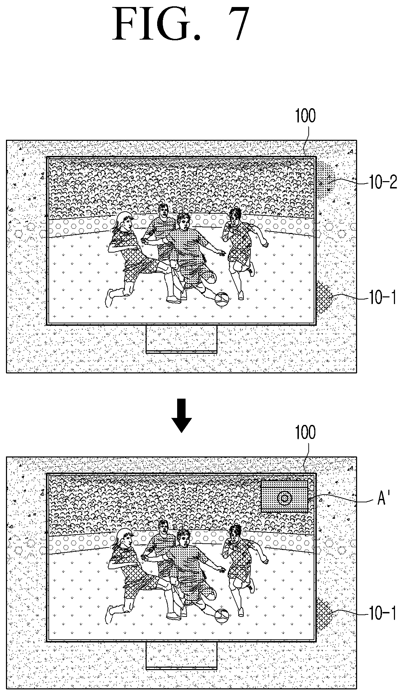

FIG. 7 is a diagram for illustrating a method for causing light emitting elements to emit light according to an application related to a function according to an embodiment of the disclosure.

Referring to FIG. 7, while displaying an image, the at least one processor 130 may identify a function, and cause at least one light emitting element among the plurality of light emitting elements 112 to emit light based on location information and color information of an application for providing the function. For example, while displaying an image, the at least one processor 130 may identify a recording function, a search function, etc. related to the image.

According to an embodiment, the at least one processor 130 may identify the second light emitting element among the plurality of light emitting elements 112 based on a previous display location or a default display location of an application (A') for providing the recording function.

According to an embodiment, the at least one processor 130 may cause the first light emitting element corresponding to an application for providing the search function to emit light in a color 10-1 corresponding to the application for providing the search function, and cause the second light emitting element corresponding to the application (A') for providing the recording function to emit light in a color 10-2 corresponding to the application (A') for providing the recording function.

According to an embodiment, if a user input for executing the application (A') for providing the recording function is received, the at least one processor 130 may execute the application (A').

According to an embodiment, the at least one processor 130 may make the user recognize whether an application for providing a function related to an image is identified (or, whether it can be executed), other than whether the predetermined notification was received, by causing at least one light emitting element to emit light based on location information on the screen related to the application and a color corresponding to the application.

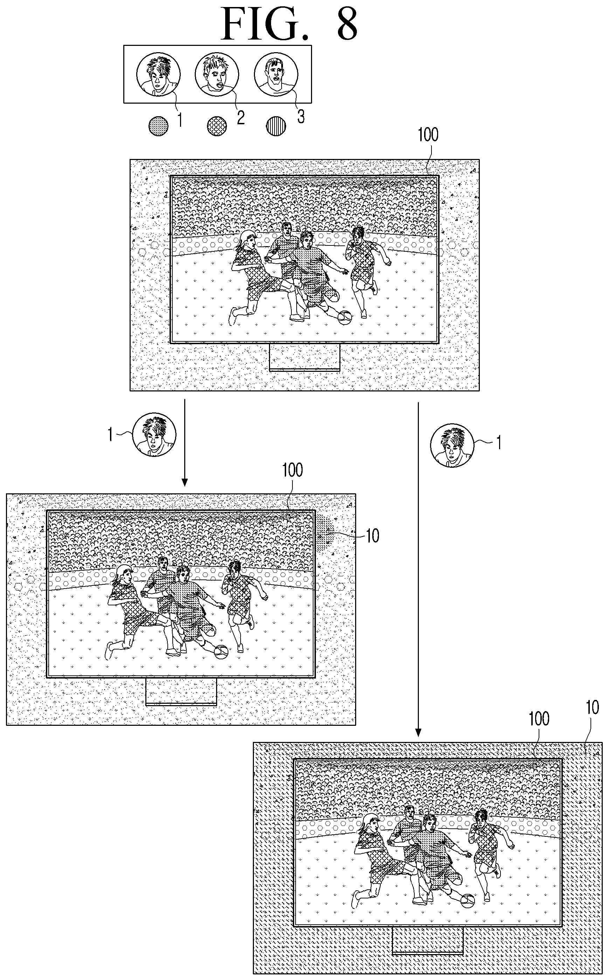

FIG. 8 is a diagram for illustrating information related to colors corresponding to each of a plurality of users according to an embodiment of the disclosure.

According to an embodiment of the disclosure, the memory 120 may store information related to colors corresponding to each of a plurality of users 1, 2, 3.

According to an embodiment, if the predetermined notification is received by the first user 1 among the plurality of users 1, 2, 3, the at least one processor 130 may identify a color corresponding to the first user 1 based on information.

According to an embodiment, the at least one processor 130 may identify a color 10 corresponding to the first user 1 as color information related to the predetermined notification.

The at least one processor 130 may identify at least one light emitting element among the plurality of light emitting elements 112 based on location information on the screen related to the predetermined notification, and cause the at least one light emitting element to emit light based on the color information related to the predetermined notification. For example, the at least one processor 130 may cause the at least one light emitting element to emit light in the color 10 corresponding to the first user 1.

However, the disclosure is not limited thereto, and the at least one processor 130 may cause the plurality of light emitting elements 112 to emit light in the color 10 corresponding to the first user 1.

According to an embodiment, the at least one processor 130 causes at least one light emitting element among the plurality of light emitting elements 112 to emit light in a color corresponding to a user to whom the predetermined notification was transmitted, and thus the at least one processor 130 can provide a sense of immersion to the users of the display device 100, and at the same time, make the user to whom the predetermined notification was transmitted recognize the reception.

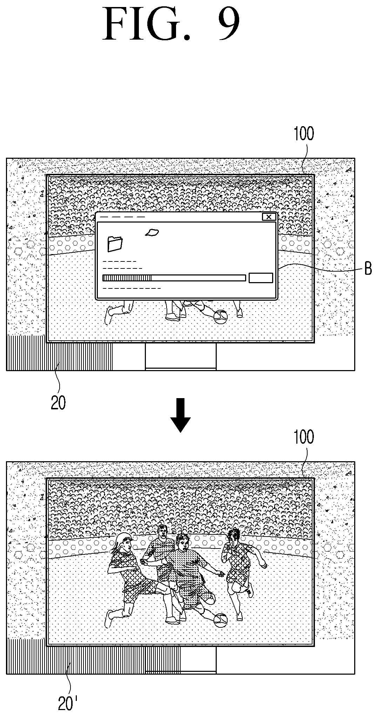

FIG. 9 is a diagram for illustrating a display device that indicates a progress rate corresponding to a progress bar by using a plurality of light emitting elements according to an embodiment of the disclosure.

According to an embodiment, the predetermined notification may include a progress bar (B). The progress bar (B) may visually indicate a progress situation (or, a progress rate) of a task that is currently being executed.

The at least one processor 130 may display an image on the entire screen, and at the same time, provide a progress rate corresponding to the progress bar (B) by using at least one of the first array to the fourth array.

For example, as illustrated in FIG. 9, the at least one processor 130 may provide a progress rate by using the fourth array including the fourth light emitting elements disposed on the fourth edge region corresponding to the lower area of the rear surface of the display 110.

For example, the at least one processor 130 may sequentially cause the fourth light emitting elements to emit light according to the progress rate. For example, if the progress rate is 0%, all of the fourth light emitting elements may not emit light, and if the progress rate is 100%, all of the fourth light emitting elements may emit light.

However, the disclosure is not limited thereto, and the at least one processor 130 may provide a progress rate by using the first array including the first light emitting elements disposed on the first edge region corresponding to the left area of the rear surface of the display 110.

For example, if the progress rate is 0%, all of the first light emitting elements may not emit light, and if the progress rate increases, the first light emitting elements may sequentially emit light, and if the progress rate is 100%, all of the first light emitting elements may emit light.

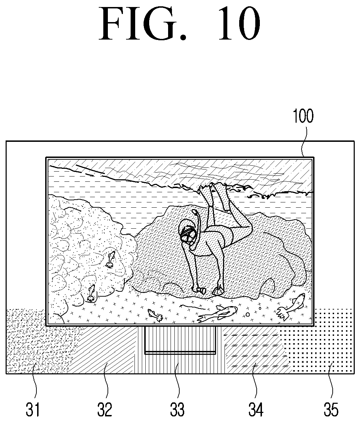

FIG. 10 is a diagram for illustrating a method for causing a plurality of light emitting elements to emit light based on location information on a screen of each of a plurality of users according to an embodiment of the disclosure.

Referring to FIG. 10, the at least one processor 130 may provide a content through which a plurality of users can interact. For example, the at least one processor 130 may control the display 110 to display a video conference, a game content, online classes, etc.

For example, a game content is a content wherein a plurality of users can participate, and interaction is possible among the plurality of users.

According to an embodiment, the at least one processor 130 may identify colors corresponding to each of a plurality of users, and cause the plurality of light emitting elements 112 to emit light based on the locations corresponding to each of the plurality of users and the colors corresponding to each of the plurality of users within a game content.

For example, the at least one processor 130 may identify the location and the color of a first user among the plurality of users, and identify a first light emitting element among the plurality of light emitting elements 112 based on the location of the first user within the game content. The at least one processor 130 may cause the first light emitting element to emit light in a color 31 corresponding to the first user.

However, the disclosure is not limited thereto. For example, the at least one processor 130 may identify a fourth user who is uttering among the plurality of users, and identify a fourth light emitting element among the plurality of light emitting elements 112 based on the location corresponding to the fourth user in a video conference. The at least one processor 130 may cause the fourth light emitting element to emit light in a color 34 corresponding to the fourth user.

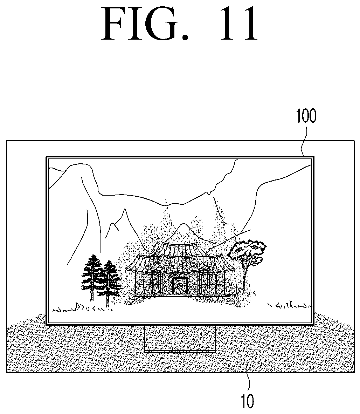

FIG. 11 is a diagram for illustrating a color corresponding to an image according to an embodiment of the disclosure.

The at least one processor 130 may identify a color corresponding to a predetermined area in an image as a color 10 corresponding to the image.

For example, as illustrated in FIG. 11, if fire is displayed in the center area of an image, the at least one processor 130 may identify red as the color 10 corresponding to the image, and cause at least one light emitting element among the plurality of light emitting elements 112 to emit light based on the color 10 corresponding to the image. For example, the at least one processor 130 may control the at least one light emitting element to emit a reddish color.

However, the disclosure is not limited thereto, and if an animation effect is provided in an image, the at least one processor 130 may identify a color corresponding to the animation effect as the color 10 corresponding to the image.

For example, if an animation effect that lightning strikes is provided in an image, the at least one processor 130 may control at least one light emitting element among the plurality of light emitting elements 112 to emit a whitish color or a bluish color.

According to an embodiment, if a first UI is selected among a plurality of UIs included in an image, the at least one processor 130 may identify a color corresponding to the first UI as the color 10 corresponding to the image. For example, if the first UI of a bluish color is selected among the plurality of UIs, the at least one processor 130 may identify the bluish color as the color 10 corresponding to the image. The at least one processor 130 may control at least one light emitting element among the plurality of light emitting elements 112 to emit the bluish color.

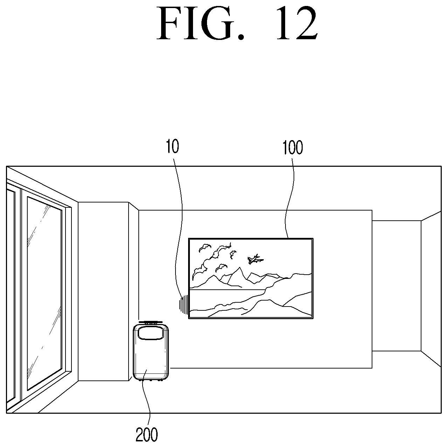

FIG. 12 is a diagram for illustrating a display device that communicates with an external device according to an embodiment of the disclosure.

Referring to FIG. 12, the display device 100 includes a communication interface, and may communicate with an external device 200 located in a home through the communication interface. According to an embodiment, the at least one processor 130 may identify the location of the external device 200.

According to an embodiment, the communication interface can obviously be implemented as various interfaces depending on implementation examples of the display device 100. For example, the communication interface may perform communication with a plurality of robots 200, a charging station 300, etc. through communication methods such as Bluetooth, Wi-Fi based on AP (Wi-Fi, a wireless LAN network), Zigbee, a wired/wireless local area network (LAN), a wide area network (WAN), Ethernet, IEEE 1394, a high-definition multimedia interface (HDMI), a universal serial bus (USB), a mobile high-definition link (MHL), Audio Engineering Society/European Broadcasting Union (AES/EBU), optical, coaxial, etc. According to an embodiment, the communication interface may perform communication with another electronic apparatus, an external server, and/or a remote control device, etc.

According to an embodiment, if a predetermined notification is received from the external device 200 through the communication interface, the at least one processor 130 may identify at least one light emitting element corresponding to the location of the external device 200 among the plurality of light emitting elements 112.

According to an embodiment, the at least one processor 130 may cause the at least one light emitting element to emit light by using color information related to the external device 200 as color information related to the predetermined notification. For example, if the color information related to the external device 200 is a blackish color, the at least one processor 130 may control the at least one light emitting element corresponding to the location of the external device 200 to emit the blackish color.

According to an embodiment, the color information related to the external device 200 may include a color predetermined by the user, a color according to identification information of the external device 200, etc.

For example, the at least one processor 130 may identify a location of an air purifier in a home by communicating with the air purifier, and if a predetermined notification requesting replacement of a filter is received from the air purifier, the at least one processor 130 may control at least one light emitting element corresponding to the location of the air purifier among the plurality of light emitting elements 112 to emit the color 10 corresponding to the air purifier.

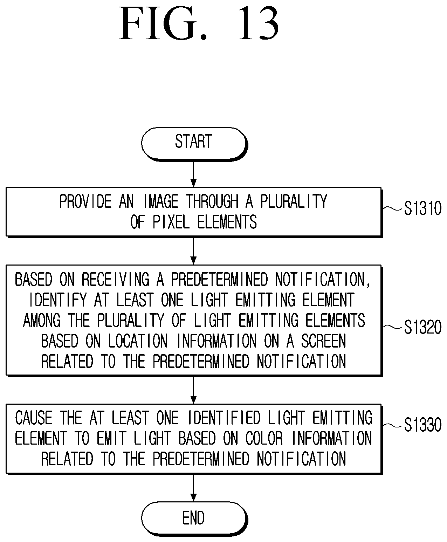

FIG. 13 is a flow chart for illustrating a control method for a display device according to an embodiment of the disclosure.

In a control method for a display device including a plurality of pixel elements disposed on a front surface and a plurality of light emitting elements disposed on an edge region of a rear surface according to an embodiment of the disclosure, an image is provided through the plurality of pixel elements in the step S1310.

If a predetermined notification is received, at least one light emitting element among the plurality of light emitting elements is identified based on location information on a screen related to the predetermined notification in the step S1320.

The at least one identified light emitting element is caused to emit light based on color information related to the predetermined notification in the step S1330.

The location information according to an embodiment of the disclosure may include a previous display location or a default display location of an application for providing the predetermined notification, and the step S1320 of identifying the at least one light emitting element may include the step of, based on receiving the predetermined notification, identifying the at least one light emitting element adjacent to the previous display location or the default display location among the plurality of light emitting elements.

The control method according to an embodiment of the disclosure may further include the step of, based on receiving a user input for identifying the predetermined notification, displaying the predetermined notification by overlaying the predetermined notification on the image.

The display device according to an embodiment of the disclosure may include a 3D display, and the step of displaying may further include the steps of, based on receiving the user input while displaying a 3D image through the 3D display, displaying the predetermined notification on the 3D image, and providing an effect that the predetermined notification is located more in front than the 3D image by granting a depth to the 3D image or blurring the 3D image.

The display device according to an embodiment may include information related to colors corresponding to each of a plurality of users, and the control method according to an embodiment of the disclosure may further include the step of, based on receiving the predetermined notification from a first user among the plurality of users, identifying a color corresponding to the first user as the color information related to the predetermined notification based on the information, and the step S1330 of causing the at least one light emitting element to emit light may include the step of causing the at least one identified light emitting element to emit light based on the color information related to the predetermined notification.

The control method according to an embodiment of the disclosure may further include the step of identifying a color corresponding to the image, and causing the plurality of light emitting elements to emit light based on the color corresponding to the image.

The edge according to an embodiment of the disclosure may include at least one of a first edge region corresponding to a left area of the rear surface of the display, a second edge region corresponding to a right area, a third edge region corresponding to an upper area, or a fourth edge region corresponding to a lower area, and the plurality of light emitting elements may include at least one of a first array including first light emitting elements disposed on the first edge region, a second array including second light emitting elements disposed on the second edge region, a third array including third light emitting elements disposed on the third edge region, or a fourth array including fourth light emitting elements disposed on the fourth edge region, and the step of causing the plurality of light emitting elements to emit light may include the step of, while displaying the image, causing the first light emitting elements included in the first array to emit light based on colors corresponding to the right area of the image, causing the second light emitting elements included in the second array to emit light based on colors corresponding to the left area of the image, causing the third light emitting elements included in the third array to emit light based on colors corresponding to the upper area of the image, and causing the fourth light emitting elements included in the fourth array to emit light based on colors corresponding to the lower area of the image.

The control method according to an embodiment may further include the step of, based on the predetermined notification including a progress bar, indicating a progress rate corresponding to the progress bar by controlling light emission of light emitting elements included in any one array among the first array to the fourth array.

The step of causing the plurality of light emitting elements to emit light according to an embodiment of the disclosure may further include the step of, based on a first UI being selected among a plurality of UIs included in the image, identifying a color corresponding to the first UI as the color corresponding to the image, or identifying a color corresponding to a predetermined area in the image as the color corresponding to the image.

The step of causing the at least one light emitting element to emit light according to an embodiment of the disclosure may include the steps of, during a predetermined time, controlling the at least one identified light emitting element to flicker based on the color information related to the predetermined notification, and based on the predetermined notification being displayed, turning off the at least one light emitting element, or causing the at least one light emitting element to emit light based on the color corresponding to the image.

The control method according to an embodiment of the disclosure may further include the steps of communicating with an external device to identify the location of the external device, and based on receiving the predetermined notification from the external device, identifying at least one light emitting element corresponding to the location among the plurality of light emitting elements, and the step of causing the at least one light emitting element to emit light may include the step of identifying color information related to the external device as the color information related to the predetermined notification and causing the at least one light emitting element to emit light.

Meanwhile, the various embodiments of the disclosure can obviously be applied not only to a display device, but also to various types of electronic apparatuses including a display function.

Meanwhile, the aforementioned various embodiments may be implemented in a recording medium that can be read by a computer or a device similar to a computer by using software, hardware, or a combination thereof. In some cases, the embodiments described in this specification may be implemented as a processor itself. According to implementation by software, the embodiments such as procedures and functions described in this specification may be implemented as separate software modules. Each of the software modules may perform one or more functions and operations described in this specification.

Meanwhile, computer instructions for performing processing operations of the display device 100 according to the aforementioned various embodiments of the disclosure may be stored in a non-transitory computer-readable medium. Computer instructions stored in such a non-transitory computer-readable medium make the processing operations at the display device 100 according to the aforementioned various embodiments performed by a specific machine, when the instructions are executed by a processor of the specific machine.

A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, ROM, and the like.

While preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Also, it is intended that such modifications are not to be interpreted independently from the technical idea or prospect of the disclosure.

## Claims

1. A display device comprising:
a display including a plurality of pixel elements disposed on a front surface and a plurality of light emitting elements disposed on an edge region of a rear surface;
memory storing one or more instructions; and
at least one processor,
wherein the at least one processor is configured to, by executing the one or more instructions:
control the display to provide an image through the plurality of pixel elements,
based on receiving a predetermined notification, identify at least one light emitting element among the plurality of light emitting elements based on location information on a screen related to the predetermined notification, and
cause the at least one identified light emitting element to emit light based on color information related to the predetermined notification.

2. The display device of claim 1,
wherein the location information comprises:
a previous display location or a default display location of an application for providing the predetermined notification, and
wherein the at least one processor is configured to:
based on receiving the predetermined notification, identify the at least one light emitting element adjacent to the previous display location or the default display location among the plurality of light emitting elements.

3. The display device of claim 1,
wherein the at least one processor is configured to:
based on receiving a user input for identifying the predetermined notification, display the predetermined notification by overlaying the predetermined notification on the image.

4. The display device of claim 3,
wherein the display comprises:
a 3D display, and
wherein the at least one processor is configured to:
based on receiving the user input while displaying a 3D image through the 3D display, display the predetermined notification on the 3D image, and
provide an effect that the predetermined notification is located more in front than the 3D image by granting a depth to the 3D image or blurring the 3D image.

5. The display device of claim 1, further comprising:
memory storing information related to colors corresponding to each of a plurality of users, and
wherein the at least one processor is configured to:
based on receiving the predetermined notification from a first user among the plurality of users, identify a color corresponding to the first user as the color information related to the predetermined notification based on the information, and
cause the at least one identified light emitting element to emit light based on the color information related to the predetermined notification.

6. The display device of claim 1,
wherein the at least one processor is configured to:
identify a color corresponding to the image, and cause the plurality of light emitting elements to emit light based on the color corresponding to the image.

7. The display device of claim 6,
wherein the edge comprises:
at least one of a first edge region corresponding to a left area of the rear surface of the display, a second edge region corresponding to a right area, a third edge region corresponding to an upper area, or a fourth edge region corresponding to a lower area, and
wherein the plurality of light emitting elements comprise:
at least one of a first array including first light emitting elements disposed on the first edge region, a second array including second light emitting elements disposed on the second edge region, a third array including third light emitting elements disposed on the third edge region, or a fourth array including fourth light emitting elements disposed on the fourth edge region, and
wherein the at least one processor is configured to:
while displaying the image, cause the first light emitting elements included in the first array to emit light based on colors corresponding to the right area of the image, cause the second light emitting elements included in the second array to emit light based on colors corresponding to the left area of the image, cause the third light emitting elements included in the third array to emit light based on colors corresponding to the upper area of the image, and cause the fourth light emitting elements included in the fourth array to emit light based on colors corresponding to the lower area of the image.

8. The display device of claim 6,
wherein the at least one processor is configured to:
based on the predetermined notification including a progress bar, indicate a progress rate corresponding to the progress bar by controlling light emission of light emitting elements included in any one array among the first array to the fourth array.

9. The display device of claim 6,
wherein the at least one processor is configured to:
based on a first UI being selected among a plurality of UIs included in the image, identify a color corresponding to the first UI as the color corresponding to the image, or identify a color corresponding to a predetermined area in the image as the color corresponding to the image.

10. The display device of claim 6,
wherein the at least one processor is configured to:
during a predetermined time, control the at least one identified light emitting element to flicker based on the color information related to the predetermined notification, and
based on the predetermined notification being displayed, turn off the at least one light emitting element, or cause the at least one light emitting element to emit light based on the color corresponding to the image.

11. The display device of claim 1, further comprising:
a communication interface,
wherein the at least one processor is configured to:
communicate with an external device through the communication interface to identify the location of the external device,
based on receiving the predetermined notification from the external device, identify at least one light emitting element corresponding to the location among the plurality of light emitting elements, and
identify color information related to the external device as the color information related to the predetermined notification and cause the at least one light emitting element to emit light.

12. A control method for a display device comprising a plurality of pixel elements disposed on a front surface and a plurality of light emitting elements disposed on an edge region of a rear surface, the method comprising:
providing an image through the plurality of pixel elements;
based on receiving a predetermined notification, identifying at least one light emitting element among the plurality of light emitting elements based on location information on a screen related to the predetermined notification; and
causing the at least one identified light emitting element to emit light based on color information related to the predetermined notification.

13. The control method of claim 12,
wherein the location information comprises:
a previous display location or a default display location of an application for providing the predetermined notification, and
wherein the identifying the at least one light emitting element comprises:
based on receiving the predetermined notification, identifying the at least one light emitting element adjacent to the previous display location or the default display location among the plurality of light emitting elements.

14. The control method of claim 12,
wherein the control method further comprises:
based on receiving a user input for identifying the predetermined notification, displaying the predetermined notification by overlaying the predetermined notification on the image.

15. The control method of claim 14,
wherein the display comprises:
a 3D display, and
wherein the displaying further comprises:
based on receiving the user input while displaying a 3D image through the 3D display, displaying the predetermined notification on the 3D image; and
providing an effect that the predetermined notification is located more in front than the 3D image by granting a depth to the 3D image or blurring the 3D image.
